Europäisches Patentamt

European Patent Office

Office européen des brevets

(19)

(11) Numéro de publication : **0 342 091 B1**

(12) **FASCICULE DE BREVET EUROPEEN**

(45) Date de publication du fascicule du brevet :
**02.01.92 Bulletin 92/01**

(21) Numéro de dépôt : **89401216.0**

(22) Date de dépôt : **28.04.89**

(51) Int. Cl.⁵ : **B60T 8/36,** B60T 8/50

(54) **Valve pilotée pour système d'antiblocage de roues.**

(30) Priorité : **10.05.88 FR 8806265**
**22.07.88 FR 8809909**

(43) Date de publication de la demande :
**15.11.89 Bulletin 89/46**

(45) Mention de la délivrance du brevet :
**02.01.92 Bulletin 92/01**

(84) Etats contractants désignés :
**DE ES FR GB IT**

(56) Documents cités :
**EP-A- 0 065 451**
**DE-A- 3 427 802**

(73) Titulaire : **BENDIX EUROPE Services**
**Techniques S.A.**
**126 rue de Stalingrad**
**F-93700 Drancy (FR)**

(72) Inventeur : **Clapeau, Vincent**
**BENDIX FRANCE S.A. 126 Rue de Stalingrad**
**F-93700 Drancy (FR)**
Inventeur : **Guesdon, Jean-Luc**
**BENDIX FRANCE S.A. 126 Rue de Stalingrad**
**F-93700 Drancy (FR)**
Inventeur : **Kervagoret, Gilbert**
**BENDIX FRANCE S.A. 126 Rue de Stalingrad**
**F-93700 Drancy (FR)**
Inventeur : **Parquet, Jean-Marc**
**BENDIX FRANCE S.A. 126 Rue de Stalingrad**
**F-93700 Drancy (FR)**

(74) Mandataire : **Lejet, Christian**
**Bendix Europe Service Techniques Service**
**Brevets 126 rue de Stalingrad**
**F-93700 Drancy (FR)**

EP 0 342 091 B1

## Description

La présente invention a pour objet une valve pilotée, plus particulièrement destinée à être insérée dans un circuit hydraulique de freinage pour un véhicule automobile, entre un servofrein et les cylindres de roue dans un système d'antiblocage des roues.

On connaît par le document EP-B-0065451 un modulateur de freinage pour système de freinage antipatinant à réalimentation, du type comportant une vanne d'isolement agencée entre un conduit destiné à être relié à une source de pression de freinage et un conduit de sortie destiné à être relié à un moteur de frein, une vanne de décharge agencée entre le conduit de sortie et un réservoir, un circuit de réalimentation incluant une restriction d'écoulement, et un solénoïde de commande muni d'un organe d'actionnement, les vannes d'isolement et de décharge ayant leurs clapets respectifs mobiles suivant un axe commun et leurs sièges respectifs en opposition, l'organe d'actionnement du solénoïde étant couplé au clapet mobile de la vanne de décharge, lequel est coupable mécaniquement au clapet mobile de la vanne d'isolement par un organe de liaison, coulissant dans un alésage, pour déplacer ce dernier vers son propre siège, à l'encontre d'un moyen de rappel élastique, lorsque le solénoïde de commande est actionné.

Selon ce document, le clapet mobile de la vanne d'isolement comporte une partie cylindrique formant l'organe de liaison et définissant intérieurement une portion de conduit du circuit de réalimentation débouchant latéralement dans l'alésage, cette portion de conduit débouchant dans l'extrémité axiale de la partie cylindrique coopérant avec le clapet mobile de la vanne de décharge et étant obturable par ce dernier, la section de la partie cylindrique étant inférieure à la section du siège du clapet mobile de la vanne d'isolement.

Ces différents composants sont intercalés dans le circuit hydraulique de freinage et reliés entre eux au moyen de canalisations multiples, ce qui présente les inconvénients d'un encombrement du système complet d'antiblocage relativement important, d'un montage relativement complexe et d'un coût assez élevé.

Dans d'autres cas, en raison du fonctionnement du système d'antiblocage des roues où des phases de montée en pression et des phases de relâchement de pression se succèdent rapidement, l'ensemble du système hydraulique est soumis à des vibrations qui peuvent devenir importantes et être préjudiciables à la durée de vie du système. Ces vibrations sont également transmises, en fin de circuit, à la pédale de freinage et sont ressenties par le conducteur du véhicule, ce qui peut le surprendre de façon parfois très désagréable et le perturber dans son action de freinage.

De plus, en dehors du fonctionnement en antiblocage, et sous l'effet d'un violent coup de pédale, il arrive que le clapet mobile de la vanne d'isolement soit entraîné par le liquide de freinage et se ferme. Ce phénomène est connu sous le nom "d'avalement dynamique" du clapet. Le liquide de freinage est alors contraint de passer par le circuit de réalimentation. L'accroissement de pression dans les cylindres de roues est alors transmis par l'intermédiaire d'une restriction, le freinage s'en trouve ralenti, et le résultat obtenu est contraire à celui qui est recherché par le violent coup de pédale initial.

La présente invention a donc pour but de réaliser un dispositif qui remplace, dans les circuits hydrauliques de freinage des véhicules munis d'un système d'antiblocage des roues, les différents composants par un seul ensemble, compact, d'encombrement réduit, de fabrication aisée, et d'un coût modéré.

Dans ce but, l'invention prévoit une valve pilotée, notamment pour système de freinage antipatinant, ce système comportant au moins une source de fluide sous pression et au moins un récepteur de pression, la valve comportant un moyen de piston coulissant de façon étanche dans un alésage et déplaçable entre une position de repos et une position active sous l'effet d'un moyen d'actionnement pour commander un clapet d'isolement entre au moins une des sources de fluide sous pression et au moins un des récepteurs de pression, et un clapet de décharge entre au moins un des récepteurs de pression et un réservoir, le système de freinage antipatinant comportant un circuit de réalimentation incluant un restricteur de débit entre au moins une des sources de fluide sous pression et au moins un des récepteurs de pression, conformément au préambule de la première revendication.

Selon l'invention, le moyen de piston contient au moins un restricteur de débit pour que la totalité du circuit de réalimentation soit contenue dans ce moyen de piston, la valve pilotée comportant en outre un clapet de réalimentation, et le moyen de piston est solidaire d'une extrémité d'une tige creuse dont l'autre extrémité forme le siège du clapet de réalimentation.

L'invention a aussi pour but de réaliser un tel dispositif qui ne transmette pas à la pédale de freinage les vibrations engendrées par le fonctionnement du système d'antiblocage.

Dans ce but, l'invention prévoit une telle valve qui comporte deux arrivées de fluide sous pression et dans laquelle le moyen de piston contient un second restricteur de débit qui, lorsque le moyen de piston est dans sa position active, est inséré dans le circuit entre les deux arrivées de fluide sous pression.

L'invention a encore pour but que le dispositif réalisé ne soit pas sujet au phénomène d'avalement dynamique du clapet d'isolement.

Dans ce but, l'invention prévoit une telle valve dans laquelle le clapet d'isolement est constitué par la tête du moyen de piston, ce clapet ayant un diamètre inférieur à celui de l'alésage dans lequel coulisse le moyen de piston, le clapet définissant avec cet alésage une chambre communiquant avec une des sources de fluide sous pression.

D'autres caractéristiques et avantages de la présente invention ressortiront de la description suivante d'un mode de réalisation donné à titre illustratif mais nullement limitatif, faite en relation avec le dessin annexé sur lequel :

— la Figure 1 est une vue en coupe longitudinale d'un premier mode de réalisation d'une valve pilotée suivant l'invention, et

— la Figure 2 est une vue en coupe longitudinale d'un second mode de réalisation d'une valve pilotée suivant l'invention.

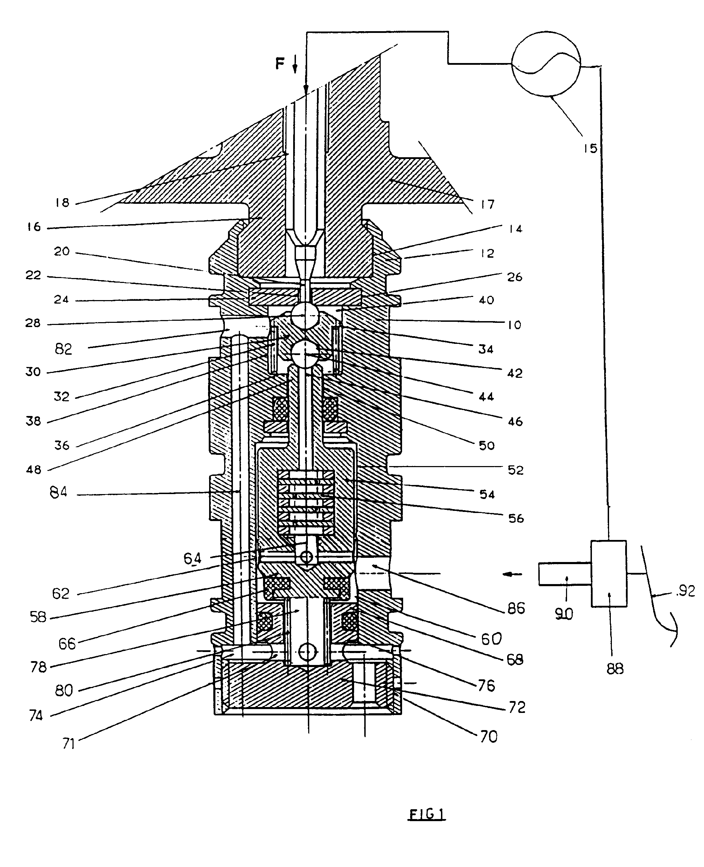

En se référant à la Figure 1, la valve pilotée selon l'invention est constituée d'un corps 10 de forme générale cylindrique, dont l'une des extrémités 12 est munie d'un alésage 14 destiné à sertir le corps 10 sur l'embase 16 d'un électro-aimant 17 (non représenté) actionnant, sous la commande d'un calculateur (non représenté), un poussoir 18. Ce poussoir 18 est muni à son extrémité d'une tige 20 pénétrant dans un perçage 22 d'une pièce 24 sertie dans un alésage 26 de même axe que l'alésage 14. Cette pièce 24 constitue le siège d'un clapet pour une bille 28, solidaire d'un guide 30 de ressort de rappel 32. Ce ressort de rappel 32 est disposé entre un épaulement 34 du guide de ressort 30 et le fond 36 d'un alésage 38 coaxial avec les précédents, et, dans la position de repos représentée, maintient la bille du clapet 28 pressée sur son siège, interdisant toute communication entre le perçage 22 et la chambre 40 définie par l'alésage 38.

Le guide 30 est muni, à son autre extrémité, d'un alésage borgne 42 qui reçoit une deuxième bille 44. Cette bille 44 forme un clapet avec l'extrémité d'un perçage 46 pratiqué dans une tige 48 et formant le siège du clapet pour la bille 44. Cette tige 48 peut coulisser de façon étanche dans un alésage 50, coaxial avec les précédents. L'alésage 50 débouche dans un autre alésage 52, dans lequel peut coulisser avec un certain jeu un piston creux 54. La tige 48 est sertie dans ou est venue de matière avec le piston creux 54, qui contient un restricteur de débit 56. Le piston 54 a une forme étagée, sa tête 58 ayant un diamètre inférieur à celui de l'alésage 52, et définissant avec celui-ci une deuxième chambre 60.

Dans la tête 58 du piston creux 54 est pratiqué un perçage diamétral 62, dans lequel débouche un perçage axial 64, ces deux perçages assurant la communication entre la chambre 60, l'intérieur du corps du piston creux et, à travers la restriction 56, le perçage 46 de la tige 48. La tête 58 du piston creux est, de plus, conformée pour recevoir une pièce 66 en matériau élastomère, formant un troisième clapet avec la tête 68 d'une pièce 72 située à l'extrémité de l'alésage 52. Ce dernier débouche dans un alésage 70 pratiqué à l'extrémité du corps 10 et qui est fermé par la pièce 72 formant un bouchon de façon à ménager un espace 74 entre lui et le fond 76 de l'alésage 70. Le bouchon 72 comporte un perçage borgne 78, dont l'entrée constitue le siège de clapet pour la pièce 66 et dont le fond forme appui pour un ressort de rappel 80 pressant la pièce 66 du troisième clapet normalement hors de son siège. La tête 68 du bouchon 72 est muni d'un perçage diamétral 71 mettant en communication l'espace 74 avec l'intérieur du perçage borgne 78.

Un perçage 82 est pratiqué dans le corps 10, et débouche dans la chambre 40 pour la mettre en communication avec les cylindres de roues (non représentés). Un autre perçage 84 est pratiqué dans le corps 10 parallèlement à son axe et met en communication le perçage 82 avec l'espace 74. Un troisième perçage 86 est aussi pratiqué dans le corps 10, et débouche dans la chambre 60 pour la mettre en communication, par une canalisation (non représentée), avec une source de fluide sous pression, constituée dans l'exemple représenté par un maître-cylindre 90 commandé par un servofrein 88, l'ensemble étant commandé par le conducteur au moyen d'une pédale 92.

Le fonctionnement du dispositif ainsi décrit est le suivant. Lors d'une phase de freinage normal, le conducteur ayant appuyé sur la pédale de frein 92, la pression du liquide de freinage dans le maître-cylindre 90 s'accroît, et cet accroissement de pression est transmis, par une canalisation (non représentée) au perçage 86 et à la chambre 60. Le ressort 80 éloignant la pièce 66 de son siège, le troisième clapet est ouvert et l'accroissement de pression est transmis aux cylindres de roues par l'intermédiaire de l'espace 74, et des perçages 84 et 82.

Ainsi qu'il a été mentionné plus haut, la tête 58 du piston 54 qui se trouve dans la chambre 60 a un diamètre inférieur à celui de l'alésage 52 dans lequel coulisse le piston 54. Il en résulte que, pendant cette phase de fonctionnement hors période d'antiblocage, cette disposition permet d'éviter que la tête 58 du piston 54 ne soit entraînée par le liquide de freinage sous l'effet d'un violent coup de pédale et ferme du même coup le troisième clapet, phénomène connu sous le nom d'"avalement dynamique".

En effet, si ce troisième clapet se fermait par avalement dynamique, il en résulterait que l'accroissement de pression serait alors transmis aux cylindres de roue par les perçages 62 et 64, la restriction 56, le perçage 46, la chambre 40 après soulèvement de la bille 44 sous l'effet de l'accroissement de pression et le perçage 82. Le liquide de freinage serait donc contraint de passer par le restricteur de débit 56, le freinage serait ralenti, et on obtiendrait un résultat contraire à celui qui est recherché par le violent coup de pédale initial.

La valve pilotée selon l'invention est insérée dans un circuit de freinage et est commandée par un dispositif d'antiblocage de roues. Ce dispositif comprend un calculateur (non représenté) qui commande le courant dans l'électro-aimant 17, et par conséquent la position du poussoir 18. Lorsque le calculateur détecte l'imminence d'un blocage des roues, il commande le mouvement du poussoir 18 dans le sens de la flèche F sur la Figure 1. Le poussoir 18 entraîne alors dans son mouvement la tige 20 et la bille 28, l'éloignant de son siège contre l'action du ressort 32 et ouvrant le premier clapet, ou clapet de décharge. La bille 28 pousse à son tour le guide 30, la bille 44, la tige creuse 48, le piston 54 dont la tête 58 vient appliquer la pièce 66 sur la pièce 68, fermant donc le troisième clapet, ou clapet d'isolement contre l'action du ressort 80. La pression générée par le maître-cylindre 90 ne peut donc plus être transmise aux freins puisque les deuxième et troisième clapets sont fermés. Par contre, le premier clapet étant ouvert, la pression régnant dans les cylindres de roues chute puisqu'ils sont alors en communication, par l'intermédiaire du perçage 82, la chambre 40, le perçage 22 et le poussoir creux 18, avec un réservoir basse pression 15 connu en soi. Le blocage des roues du véhicule est ainsi évité.

Il est à noter que, durant cette phase de détente, il n'y a pas de perte de liquide de freinage de la source de pression 90 vers l'accumulateur basse pression à travers le piston creux 54 et le restricteur 56 qu'il contient, puisque le deuxième clapet est fermé.

Lorsque le calculateur détecte la disparition de la tendance au blocage de la roue, il commande alors la désexcitation de l'électro-aimant 17, le poussoir 18 revient alors dans sa position de repos dans le sens inverse à celui de la flèche F sur la Figure 1. Le clapet de décharge se referme alors sous l'action du ressort 32. La bille 44 devient libre et ouvre le deuxième clapet, ou clapet de réalimentation. La pression régnant dans le maître-cylindre 90 est alors transmise aux cylindres de roue par l'intermédiaire du perçage 86, la chambre 60, les perçages 62 et 64, le restricteur 56, le perçage 46, la chambre 40 et le perçage 82. Le restricteur 56 a alors pour effet de tempérer la remontée en pression du liquide dans le circuit de freinage. Le piston 54 est soumis à tout moment, pendant cette phase de remontée en pression, d'une part, sur sa face portant la tige 48, à la pression générée par le maître-cylindre 90 grâce au jeu ménagé entre le piston 54 et l'alésage 52, et d'autre part, sur la face de la pièce 66 du clapet d'isolement, à la pression régnant dans les cylindres de roue par l'intermédiaire des perçages 82 et 84 et de l'espace 74, cette pression ayant été tempérée par le restricteur 56 et étant donc inférieure à la pression s'exerçant sur l'autre face du piston. On comprend donc que, grâce à cette différence de pression, le clapet d'isolement reste fermé durant toute cette phase de remontée en pression, ne permettant l'alimentation des cylindres de roues que par l'intermédiaire du restricteur de débit 56, le clapet de réalimentation étant ouvert.

Si le calculateur détecte à nouveau l'imminence du blocage des roues, il commandera alors une nouvelle phase de détente indentique à la précédente, à ceci près qu'au début de cette deuxième détente, le clapet d'isolement est déjà fermé, l'effort à fournir par la tige 18 pour ouvrir le clapet de décharge et fermer le clapet de réalimentation ne devant vaincre que la résistance du ressort 32.

Cette phase de détente sera suivie à son tour d'une phase de remontée en pression identique à la précédente, et ainsi de suite, soit jusqu'à l'arrêt total du véhicule, soit jusqu'à ce que le conducteur cesse d'appuyer sur la pédale 92. A ce moment, les pressions sur les deux faces du piston 54 deviennent égales, et le clapet d'isolement peut s'ouvrir sous l'action du ressort 80. La valve pilotée revient alors à sa position de repos initiale. Le liquide de freinage peut alors retourner au maître-cylindre par les perçages 82 et 84, l'espace 74, la chambre 60 et le perçage 86.

On a ainsi réalisé selon l'invention une valve pilotée d'encombrement et de coût réduits puisqu'elle inclut la totalité du circuit de réalimentation, et de fonctionnement fiable. De plus, cette valve n'est pas sujette au phénomène d'avalement dynamique grâce aux dimensions respectives de la tête du piston et de l'alésage dans lequel il coulisse.

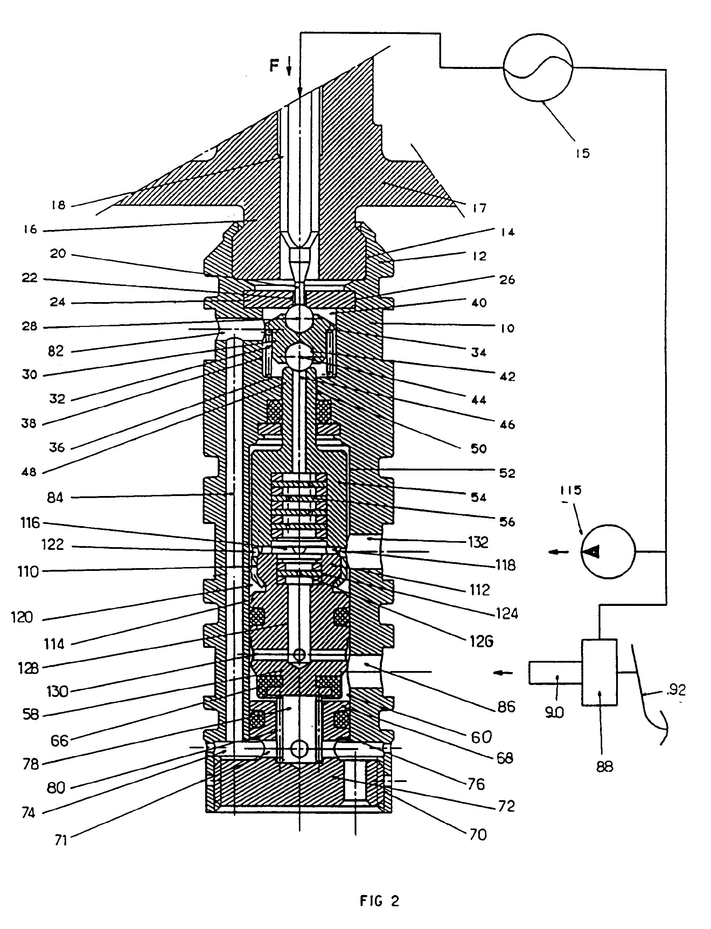

On a représenté sur la Figure 2 un second mode de réalisation d'une valve pilotée selon l'invention, utilisable par exemple dans les systèmes de freinage antipatinant comportant une source de fluide additionnelle sous haute pression. Sur cette Figure, les éléments identiques ou analogues à ceux du mode de réalisation précédent sont repérés par les mêmes références numériques.

Le mode de réalisation illustré sur la Figure 2 diffère du mode précédent en ce que dans la tête du piston creux 54 est pratiqué un alésage 110 destiné à recevoir la partie 112 de diamètre réduit d'un deuxième piston étagé 114 coulissant lui aussi de façon étanche dans l'alésage 52. La tête du piston 54 est sertie autour de la partie 112 du piston 114, de façon à ménager entre l'extrémité de la partie 112 et le fond de l'alésage 110 un espace 116 grâce à des entretoises 118 et de façon également à ménager un autre espace 120 entre eux et l'alésage 52. L'espace 116 communique avec l'espace 120 grâce à des ouvertures 122 pratiquées dans la tête du piston.

Dans le piston 114 est pratiqué un alésage étagé borgne, dont la partie de plus grand diamètre 124 faisant face au piston 54, reçoit un restricteur de débit 126, et dont la partie borgne de plus petit diamètre 128 débouche dans un perçage diamétral 130 pratiqué dans une troisième partie du piston 114 de diamètre inférieur à celui de l'alésage 52, et définissant avec celui-ci un espace 60.

La tête 58 du piston 114, est identique à la tête 58 du piston 54 du mode de réalisation de la Figure 1 et joue exactement le même rôle en formant un troisième clapet ou clapet d'isolement avec la tête 68 d'une pièce 72 située à l'extrémité de l'alésage 52.

Les perçages 82, 84 et 86 sont identiques à ceux du mode de réalisation précédent, et un perçage, supplémentaire 132 est pratiqué dans le corps 10, et débouche dans la chambre 120 pour la mettre en communication, par une canalisation (non représentée) avec une source de liquide de freinage sous haute pression telle qu'une pompe haute pression 115.

Le fonctionnement du dispositif ainsi décrit est le suivant. Lors d'une phase de freinage normal, le conducteur ayant appuyé sur la pédale de frein 92, la pression du liquide de freinage dans le maître-cylindre 90 s'accroît, et cet accroissement de pression est transmis, par une canalisation (non représentée) au perçage 86 et à la chambre 60. Le ressort 80 éloignant la pièce 66 de son siège, le clapet d'isolement est ouvert et l'accroissement de pression est transmis aux cylindres de roues par l'intermédiaire des espaces 78 et 74, et des perçages 84 et 82.

Le circuit hydraulique comprenant le perçage 130, l'alésage 128, la restriction 126, l'espace 116, les perçages 122 et 132 est connecté à la sortie de la pompe haute pression 115 qui, dans cette phase de freinage normal, est inactive. Par conséquent, l'accroissement de pression dans ce dernier circuit n'a aucune influence sur le fonctionnement de la valve pilotée dans cette phase de freinage normal.

De même que précédemment, les dimensions respectives de la tête 58 du piston 114 et de l'alésage 52 permettent d'éviter le phénomène d'avalement dynamique du clapet d'isolement.

Lorsqu'un calculateur détecte l'imminence d'un blocage des roues, il commande le mouvement du poussoir 18 dans le sens de la flèche F sur la Figure 2. Le poussoir 18 entraîne alors dans son mouvement la tige 20 et la bille 28, l'éloignant de son siège contre l'action du ressort 32 et ouvrant le clapet de décharge. La bille 28 pousse à son tour le guide 30, la bille 44, la tige creuse 48, le piston 54, le piston 114, dont la tête 58 vient appliquer la pièce 66 sur la pièce 68, fermant donc le clapet d'isolement contre l'action du ressort 80. Le clapet de décharge étant ouvert, la pression régnant dans les cylindres de roues chute puisqu'ils sont alors en communication, par l'intermédiaire du perçage 82, la chambre 40, le perçage 22 et le poussoir creux 18, avec un réservoir basse pression 15. Dans cette phase de freinage, dite phase de détente, la pompe haute pression 115 est simultanément actionnée sous la commande du calculateur et débite dans le circuit formé par les perçages 132 et 122, l'espace 116, la restriction 126, l'alésage 128, le perçage 130 et l'espace 60, venant ainsi contrebalancer la pression engendrée par le maître-cylindre 90, sans à-coup grâce à la restriction 126. La pression dans le circuit hydraulique entre le perçage 86 et le maître-cylindre 90 reste ainsi sensiblement constante, les clapets d'isolement et de réalimentation étant fermés, la pression engendrée par le maître-cylindre 90 ou par la pompe 115 ne peut pas être transmise aux freins. Le blocage des roues du véhicule est ainsi évité sans variation brutale de pression dans ce circuit hydraulique, et donc sans réaction sur la pédale de freinage 92.

Lorsque le calculateur détecte la disparition de la tendance au blocage de la roue, il commande alors la désexcitation de l'électro-aimant 17, et le poussoir 18 revient dans la position de repos dans le sens inverse à celui de la flèche F sur la Figure 2. Le clapet de décharge se referme alors sous l'action du ressort 32. La bille 44 devient libre et ouvre le clapet de réalimentation. La pression engendrée par la pompe 115 est alors transmise aux cylindres de roues par l'intermédiaire des perçages 132 et 122 la chambre 116, le restricteur 56, le perçage 46, la chambre 40 et le perçage 82. Le restricteur 56 a pour effet de tempérer la remontée en pression du liquide dans le circuit de freinage.

Pendant cette phase de remontée en pression, d'une part le piston 54 est soumis à tout moment, du côté le plus proche du clapet de réalimentation, à la pression P1 engendrée par la pompe haute pression 115, et d'autre part le piston 114 est soumis du côté le plus proche du clapet d'isolement, à la pression P2 régnant dans les freins de roue, et inférieure à la pression P1. Les deux pistons 54 et 114 étant solidaires, l'ensemble est sollicité dans le sens de la flèche F, c'est à dire dans le sens de la fermeture du clapet d'isolement et de l'ouverture du clapet de réalimentation. La phase de remontée tempérée en pression peut donc se poursuivre normalement.

Pendant cette phase de remontée en pression, la pression engendrée par la pompe haute pression 115 est également transmise par la restriction 126 et le perçage 128, au perçage 86 et au maître-cylindre 90. La présence de la restriction 126 a pour effet de tempérer également la montée en pression dans le circuit menant au maître-cylindre.

Si le calculateur détecte à nouveau l'imminence du blocage des roues, il commandera alors une nouvelle phase de détente identique à la précédente, à ceci près qu'au début de cette deuxième détente, le clapet d'isolement est déjà fermé, l'effort à fournir par la tige 18 pour ouvrir le clapet de décharge et fermer le clapet de réalimentation ne devant vaincre que la résistance du ressort 32.

Cette phase de détente sera suivie à son tour d'une phase de remontée en pression identique à la précédente et ainsi de suite, soit jusqu'à l'arrêt total du véhicule, soit jusqu'à ce que le conducteur cesse d'appuyer sur la pédale 92. A ce moment, le calculateur commande la désexcitation de l'électro-aimant 17 et de la pompe 115. Les pressions dans l'ensemble du circuit hydraulique tendent à s'uniformiser, provoquant l'ouverture du clapet d'isolement et par conséquent la fermeture des clapets de décharge et de réalimentation. La valve pilotée revient alors dans sa position de repos initiale et le liquide de freinage contenu dans les cylindres de roues peut retourner, via les perçages 82, 84, 74, les espaces 78 et 60, et le perçage 86, au maître-cylindre 90 et au réservoir 15.

On a ainsi réalisé selon l'invention une valve pilotée compacte, d'encombrement réduit, et de fonctionnement fiable. De plus, les variations de pression hydrauliques, engendrées par la succession rapide des phases de détente et de remontée en pression, sont bien transmises aux cylindres de roues en aval de la valve, mais sont filtrées et lissées vers le maître-cylindre en amont de la valve, grâce à l'action du restricteur de débit 126 dans le circuit compris entre la pompe haute pression et le maître-cylindre.

**Revendications**

1. Valve pilotée notamment pour un système de freinage antipatinant, ce système comportant au moins une source de fluide sous pression (90, 115) et au moins un récepteur de pression, la valve comportant au moins une arrivée de fluide sous pression (86, 132) et comportant un moyen de piston (54, 114) coulissant de façon étanche dans un alésage (52) et déplaçable entre une position de repos et une position active sous l'effet d'un moyen d'actionnement (17, 18) pour commander un clapet d'isolement (58, 66) entre au moins une des sources de fluide sous pression (90, 115) et au moins un des récepteurs de pression, et un clapet de décharge (28) entre au moins un des récepteurs de pression et un réservoir (15), le système de freinage antipatinant comportant un circuit de réalimentation incluant un restricteur de débit entre au moins une des sources de fluide sous pression (90, 115) et au moins un des récepteurs de pression, la valve pilotée étant caractérisée en ce que le moyen de piston (54) contient au moins un restricteur de débit (56, 126) pour que la totalité du circuit de réalimentation soit contenue dans ce moyen de piston (54), la valve pilotée comportant en outre un clapet de réalimentation (44) ; et en ce que le moyen de piston (54) est solidaire d'une extrémité d'une tige creuse (48) dont l'autre extrémité forme le siège du clapet de réalimentation (44).

2. Valve selon la revendication 1, caractérisée en ce qu'elle comporte deux arrivées de fluide sous pression (86, 132) et un second restricteur de débit (126) qui, lorsque le moyen de piston (54, 114) est dans sa position active, est inséré dans le circuit entre les deux arrivées de fluide sous pression (86, 132).

3. Valve selon la revendication 2 caractérisée en ce que les deux restricteurs de débit (56, 126) sont séparés par un espace (116) en communication directe avec une (132) des arrivées de fluide sous pression (86, 132).

4. Valve selon l'une quelconque des revendications précédentes, caractérisée en ce que le clapet d'isolement (58, 66) est constitué par la tête du moyen de piston (54, 114) et en ce que le clapet a un diamètre inférieur à celui de l'alésage (52) dans lequel coulisse le moyen de piston, le clapet (58, 66) définissant avec l'alésage (52) une chambre (60) communiquant avec une des sources de fluide sous pression (90).

**Patentansprüche**

1. Gesteuertes Ventil, insbesondere für ein Antiblockiersystem, wobei dieses System wenigstens eine mit Druck beaufschlagte Fluidquelle (90, 115) und wenigstens einen Druckaufnehmer umfaßt, mit wenigstens einer Zuführung (86, 132) für das mit Druck beaufschlagte Fluid und einem Kolbenmittel (54, 114), das auf dichte Weise in einer Bohrung (52) gleitet und zwischen einer Ruheposition und einer aktiven Position unter der Wirkung eines Betätigungsmittels (17, 18) verschiebbar ist, um ein Trennventil (58, 66) zwischen wenigstens einer der Quellen (90, 115) für das mit Druck beaufschlagte Fluid und wenigstens einem der Druckaufnehmer und ein Entlastungsventil (28) zwischen wengistens einem der Druckaufnehmer und einem Behälter (15) zu steuern, wobei das Antiblockiersystem einen Nachversorgungskreis aufweist, der zwischen wenigstens einer der Quellen für das mit Druck beaufschlagte Fluid (90, 115) und wenigstens einem der Druckaufnehmer einen Mengenbegrenzer enthält, wobei das gesteuerte Ventil dadurch gekennzeichnet ist, daß das Kolbenmittel (54) wenigstens einen Mengenbegrenzer (56, 126) enthält, damit der gesamte Nachversorgungskreis in diesem Kolbenmittel (54) enthalten ist, wobei das gesteuerte Ventil außerdem ein Nachversorgungsventil (44) aufweist, und daß das Kolbenmittel (54) mit einem Ende eines Hohlstifts (48) verbunden ist, dessen anderes Ende den Sitz des Nachversorgungsventils (44) bildet.

2. Ventil gemäß Anspruch 1, dadurch gekennzeichnet, daß es zwei Zuführungen für das mit Druck beaufschlagte Fluid (86, 132) und einen zweiten Mengenbegrenzer (126) umfaßt, wobei der zweite Mengenbegrenzer (126) dann, wenn sich das Kolbenmittel (54, 114) in seiner aktiven Position befindet, in den Kreis zwischen den zwei Zuführungen für das mit Druck beaufschlagte Fluid (86, 132) eingesetzt wird.

3. Ventil gemäß Anspruch 2, dadurch gekennzeichnet, daß die zwei Mengenbegrenzer (56, 126) durch einen Raum (116) getrennt sind, der mit einer der Zuführungen für das mit Druck beaufschlagte Fluid (86, 132) in einer direkten Verbindung steht.

4. Ventil gemäß einem der vorangehenden Ansprüche, dadurch gekennzeichnet, daß das Trennventil (58, 66) vom Kopf des Kolbenmittels (54, 114) gebildet wird und daß das Ventil einen Durchmesser besitzt, der kleiner als derjenige der Bohrung (52) ist, in der das Kolbenmittel gleitet, wobei das Ventil (58, 66) mit der Bohrung (52) eine Kammer (60) definiert, die mit einer der Quellen (90) für das mit Druck beaufschlagte Fluid in Verbindung steht.

## Claims

1. Pilot-controlled valve, especially for an anti-skid brake system comprising at least one pressurized-fluid source (90, 115) and at least one pressure receiver, the valve comprising at least one pressurized-fluid inlet (86, 132) and comprising a piston means (54, 114) sliding sealingly in a bore (52) and movable between a rest position and an active position under the effect of an actuating means (17, 18), in order to control an isolating shutter (58, 66) between at least one of the pressurized-fluid sources (90, 115) and at least one of the pressure receivers, and a discharge shutter (28) between at least one of the pressure receivers and a reservoir (15), the anti-skid brake system comprising a backfeed circuit including a flow restrictor between at least one of the pressurized-fluid sources (90, 115) and at least one of the pressure receivers, the pilot-controlled valve being characterized in that the piston means (54) contains at least one flow restrictor (56, 126) to ensure that the entire backfeed circuit is contained in this piston means (54), the pilot-controlled valve also possessing a backfeed shutter (44) and in that the piston means (54) is firmly secured to one end of a hollow rod (48), the other end of which forms the seat of the backfeed shutter (44).

2. Valve according to Claim 1, characterized in that it includes two pressurized-fluid inlets (86, 132), and a second flow restrictor (126) which, when the piston means (54, 114) is in its active position, is inserted in the circuit between the two pressurized-fluid inlets (86, 132).

3. Valve according to Claim 2, characterized in that the two flow restrictors (56, 126) are separated by a space (116) in direct communication with one (132) of the pressurized-fluid inlets (86, 132).

4. Valve according to any one of the preceeding claims, characterized in that the isolating shutter (58, 66) is constituted by the head of the piston means (54, 114), and in that the shutter has a diameter smaller than that of the bore (52) in which the piston means slides, the shutter (58, 66) defining with the bore (52) a chamber (60) communicating with one of the pressurized-fluid sources (90).

FIG 1

8

FIG 2